# EUROPÄISCHE PATENTSCHRIFT

(11) **EP 1 616 514 B1**
(45) Veröffentlichungstag und Bekanntmachung des Hinweises auf die Patenterteilung: **03.10.2007**
(21) Anmeldenummer: 05109332.6
(22) Anmeldetag: 28.04.1995
(51) Int. Cl.: A47J 27/62, A47J 36/16, G05D 23/19, A47J 27/14, A47J 43/046

(54) **Küchenmaschine mit einem Rührgefäß und einem Antrieb für ein Rührwerk in dem Rührgefäß**
Food processor with a mixing vessel and a drive mechanism for an agitator in the mixing vessel
Robot ménager comportant un bac à agitation et un mécanisme d'entrainement de l'agitateur du bac

(30) Priorität: 28.04.1994 DE 4414825
(43) Veröffentlichungstag der Anmeldung: 18.01.2006
(62) Teilanmeldung aus: 99118360.9
(73) Patentinhaber: Vorwerk & Co. Interholding GmbH, 42275 Wuppertal (DE)
(72) Erfinder: Lamping, Andreas, D-42657, Solingen (DE); Cholewa, Lothar, D-44627, Herne (DE); Herrmann, Thomas, D-45772, Marl (DE); Mesli, Richard, D-58332, Schwelm (DE)
(74) Vertreter: Müller, Enno

(56) Entgegenhaltungen:
- EP-A- 0 172 576
- WO-A-91/02483
- DE-A- 3 507 276
- GB-A- 1 544 035
- US-A- 4 323 110

## Beschreibung

Die Erfindung betrifft eine Küchenmaschine nach den Merkmalen des Oberbegriffes des Anspruchs 1.

Eine derartige Küchenmaschine ist ganz grundsätzlich aus der DE 35 07 276 A1 bekannt. Zudem ist es hinsichtlich beleuchteter Schalter für Drehwahlschalter von Haushaltsgeräten aus der EP 0172576 bekannt, die Intensität der Beleuchtung oder die Intensität einer vorgewählten Farbe höherer Schaltstufe intensiver einzustellen.

Ausgehend von dem eingangs genannten Stand der Technik stellt sich der Erfindung die Aufgabe, bei einer Küchenmaschine der in rede stehenden Art eine vorteilhafte Ausgestaltung der Schalter anzugeben.

Diese Aufgabe ist beim Gegenstand des Anspruches 1 gelöst, wobei darauf abgestellt ist, dass die Beleuchtung durch LED-Anzeigen realisiert ist und dass die LED-Anzeigen zweifarbig ausgebildet sind. Dies kann beispielsweise dadurch gelöst sein, dass LED-Anzeigen für Temperatur und/oder Drehzahl zweifarbig ausgebildet sind, beispielsweise gelb und rot. Licht emittierende Komponenten wie z.B. LED's speisen Licht von entgegengesetzten Richtungen in einen Lichtleiter ein. Der Lichtleiter ist dabei so ausgelegt, dass Licht senkrecht zur Richtung der Einspeisung abgestrahlt wird und so der Effekt eines Lichtbalkens entsteht. Je nach Ansteuerung der Einspeisekomponenten (LED's) kann so, abgesehen von einer Verlagerung der Intensität von einer Seite des Lichtbalkens zur anderen oder einer Erhöhung der Intensität (bei gleichfarbigen Einspeisekomponenten) bei farblich unterschiedlichen Einspeisekomponenten ein Effekt fließender Veränderung von der Farbe der einen Einspeisekomponente über Mischlicht bis hin zur Farbe der anderen Einspeisekomponente erzielt werden. Für die Drehzahl kann bei zweifach einfarbiger Einspeisung einer niedrigen Drehzahl eine entsprechende Intensität zugeordnet und angezeigt und bei Erhöhung der Drehzahleinstellung die Intensität zum anderen Ende des Lichtbalkens hin verlagert oder erhöht werden. Während bei niedrigeren Einstellbereichen die gelben LED's stark aktiviert sind, die roten dagegen nur schwach, erfolgt mit zunehmend höheren Einstellungen eine Abschwächung der Aktivierung der gelben und eine Verstärkung der Aktivierung der roten LED's. Die beleuchteten Skalenfelder um die Schalter (Potentiometer) besitzen somit eine Signalfunktion für den Benutzer, insbesondere bei höheren Einstellwerten.

Die Erfindung ist nachstehend anhand eines zeichnerisch veranschaulichten Ausführungsbeispieles näher erläutert. Es zeigt
- Fig.1: eine erfindungsgemäße Küchenmaschine mit einem Rührgefäß in einer Seitenansicht,
- Fig. 2: die Küchenmaschine gemäß Figur 1 in Vorderansicht.
- Fig. 3: die Küchenmaschine in Draufsicht, jedoch nach Abnahme des Rührgefäßes,
- Fig. 4: die Unteransicht des Rührgefäßes,
- Fig. 5: eine Ausschnittsvergrößerung des Bereiches V in Figur 1, in Schnittdarstellung,
- Fig. 6: ein Blockschaltbild einer Heizungssteuerung der Küchenmaschine,
- Fig. 7: ein Diagramm zur Darstellung einer Temperatursteigung in Abhängigkeit zur Zeit, bezüglich der Heizungssteuerung,
- Fig. 8: ein weiteres Diagramm zur Darstellung der Leistungsaufnahme in Abhängigkeit zur Zeit, in Bezug auf das Diagramm in Figur 7 und
- Fig. 9: eine schematische Darstellung eines Rührwerkantriebes mit einer Kühlung.

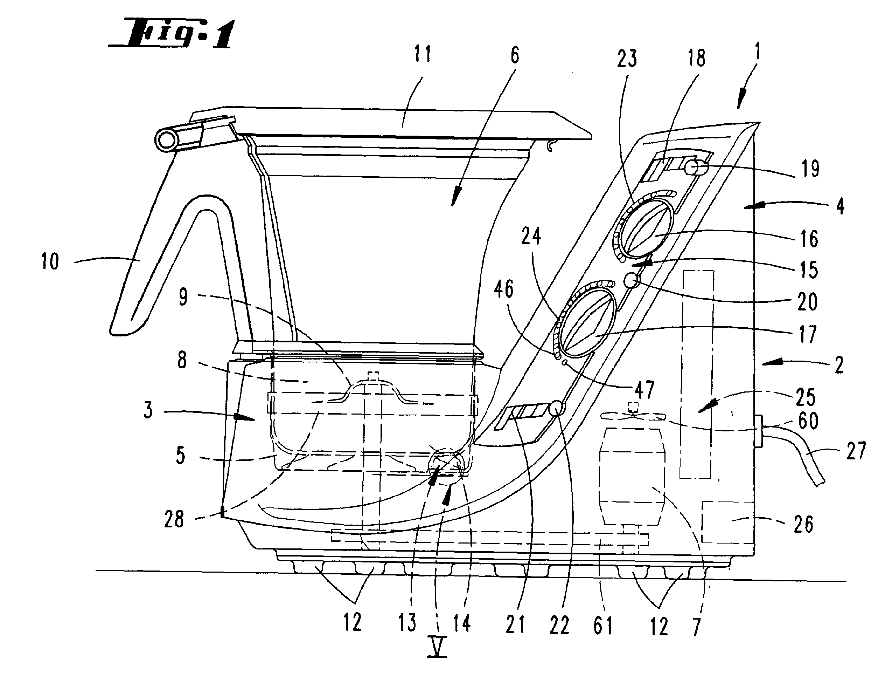

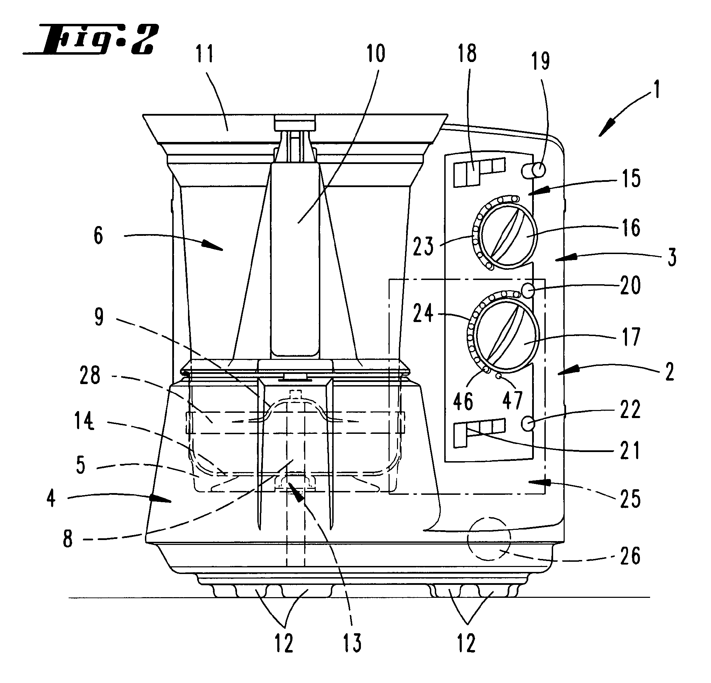

Die in Figur 1 dargestellte Küchenmaschine 1 besitzt ein Gehäuse 2, welches sich im Wesentlichen aus zwei Bereichen zusammensetzt. Der erste, niedrigere Bereich ist ein Rührgefäß-Aufnahmebereich 3, von welchem ausgehend sich ein in einem Winkel von ca. 6 0 Grad zur Horizontalen nach oben hin erstreckender Bediener- und Elektronikbereich 4 erstreckt.

Der Rührgefäß-Aufnahmebereich 3 weist eine kreisrunde Aufnahme 5 für ein Rührgefäß 6 auf. Des weiterem ist in diesem Bereich 3 ein Antriebsmotor 7 koaxial der Aufnahme 5 zugeordnet, über welchen mittels einer Antriebswelle 8 ein in dem Rührgefäß 6 angeordnetes Rührwerk 9 in Betrieb gesetzt werden kann.

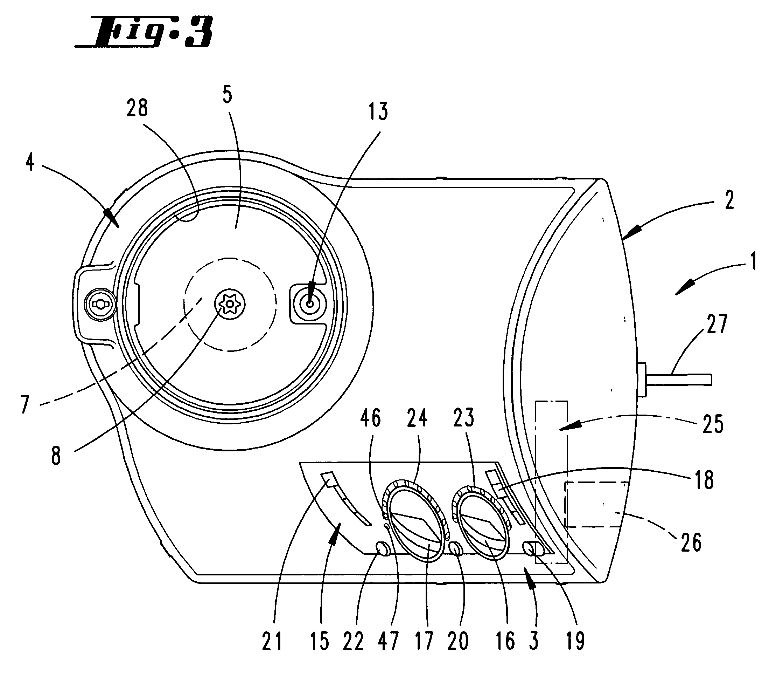

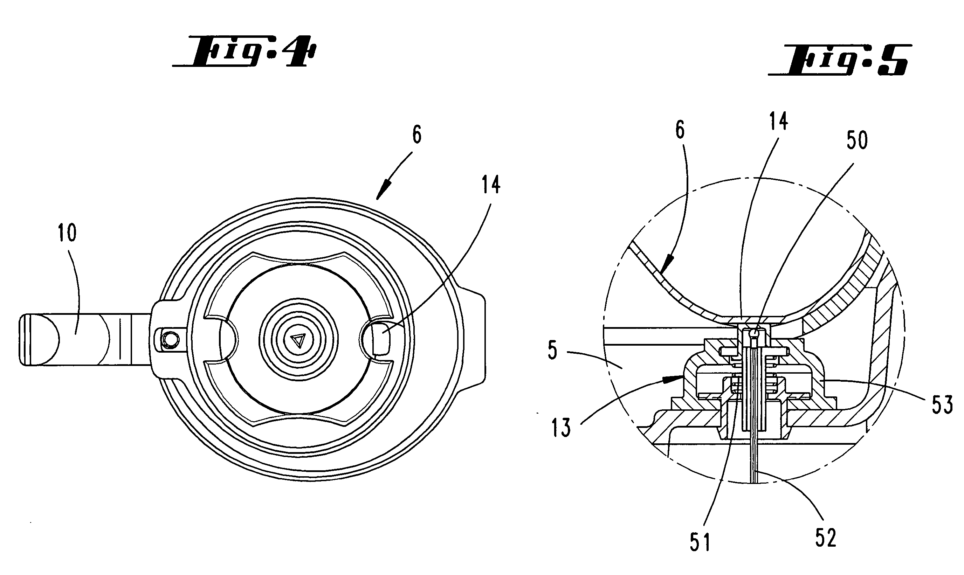

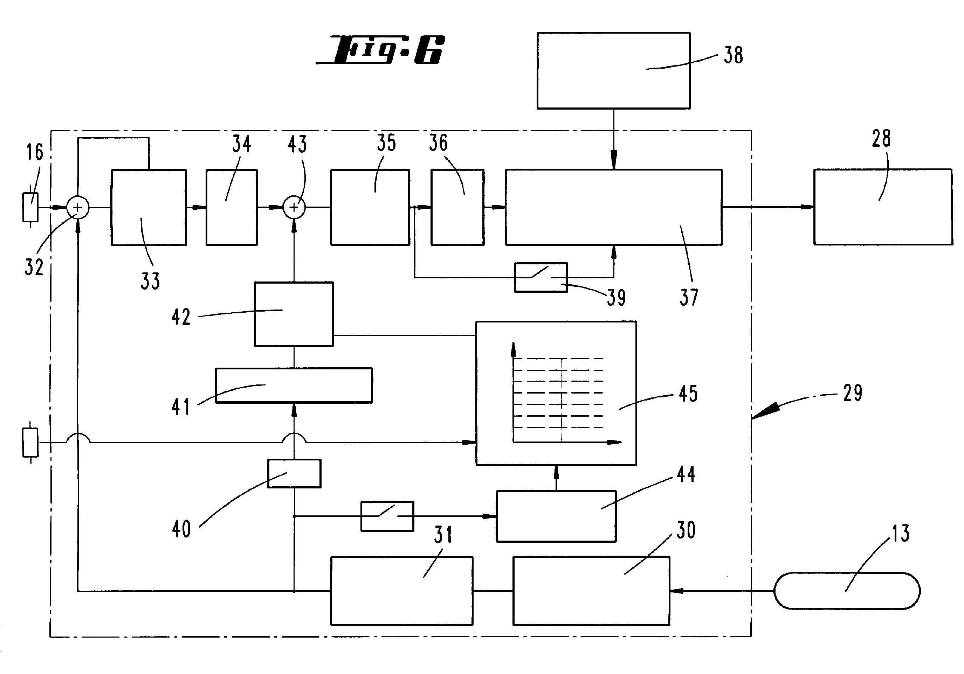

Das Rührgefäß 6 ist mit einem, in eingesetztem Zustand dem Bediener- und Elektronikbereich 4 abgewandten Handgriff 10 versehen. Des weiteren weist das Rührgefäß 6 einen Deckel 11 auf, welcher beispielsweise mittels einer Klammerung oder dergleichen an dem Rührgefäß 6 gehalten ist Das mit Stellfüßen 12 versehene Gehäuse 2 besitzt im Bodenbereich der Aufnahme 5 einen Temperatursensor 13, welcher bei in die Aufnahme 5 eingesetztem Rührgefäß gegen den Topfboden 14 tritt. Der Temperatursensor 13 besitzt im wesentlichen einen abgedeckten Sensorkopf 50, welcher mittels einer Druckfeder 51 stets in Richtung auf den Topfboden 14, d.h. vertikal nach oben, belastet ist Sowohl der mit einem elektrischen Anschluss 52 versehene Sensorkopf 50 als auch die Druckfeder 51 sind in einem Gehäuse 53 aufgenommen, welches im Bodenbereich der Aufnahme 5 befestigt ist (siehe Figur 5).

In dem Bediener- und Elektronikbereich 4 ist in der dem Rührgefäß 6 zugewandten Fläche der Gehäusewandung ein Bedienerdisplay 15 vorgesehen. Letzteres beinhaltet einen Drehschalter 16 für eine Temperaturvorwahl, einen weiteren Drehschalter 17 zur Vorwahl einer Drehzahl des Rührwerkes 9, eine elektronische Uhr 18 mit einem zur Einstellung dieser Uhr 18 dienenden Drehschalter 19, eine Taste 2 0 zur Erzielung einer Turboschaltung und eine elektronische Gewichtsanzeige 21 mit einer dieser Anzeige zugeordneten Reset-Taste 22. Die Drehschalter 16 und 17 zur Temperatur- bzw. Drehzahleinstellung sind jeweils mittels einer LED-Anzeige 23, 24 beleuchtet, wobei jede Anzeige 23, 24 Einstellpunkte aufweist

Weiterhin ist in dem Bediener- und Elektronikbereich 4 die Steuerelektronik für die Küchenmaschine 1 angeordnet Diese ist in den gezeigten Figuren in Form einer Box 2 5 schematisch dargestellt

An dem rückwärtigem Gehäusebereich ist ein Sammelstecker 26 vorgesehen, in welchem Abfrageschleifen bezüglich elektrischer und/ oder mechanischer Komponenten zusammengeführt sind. Dieser Sammelstecker 26 ist ebenfalls schematisch dargestellt.

Der Elektrokabelanschluss zur Versorgung der Küchenmaschine 1 ist mit der Ziffer 27 bezeichnet.

Der untere Bereich des Rührgefäßes 6 ist im Bereich der Aufnahme 5 des Gehäuses 2 aufheizbar. Hierzu besitzt die Küchenmaschine 1 im Bereich der Aufnahme 5 eine elektrische Widerstandsheizung 28, welche den unteren Bereich des Rührtopfes 6 umschließt.

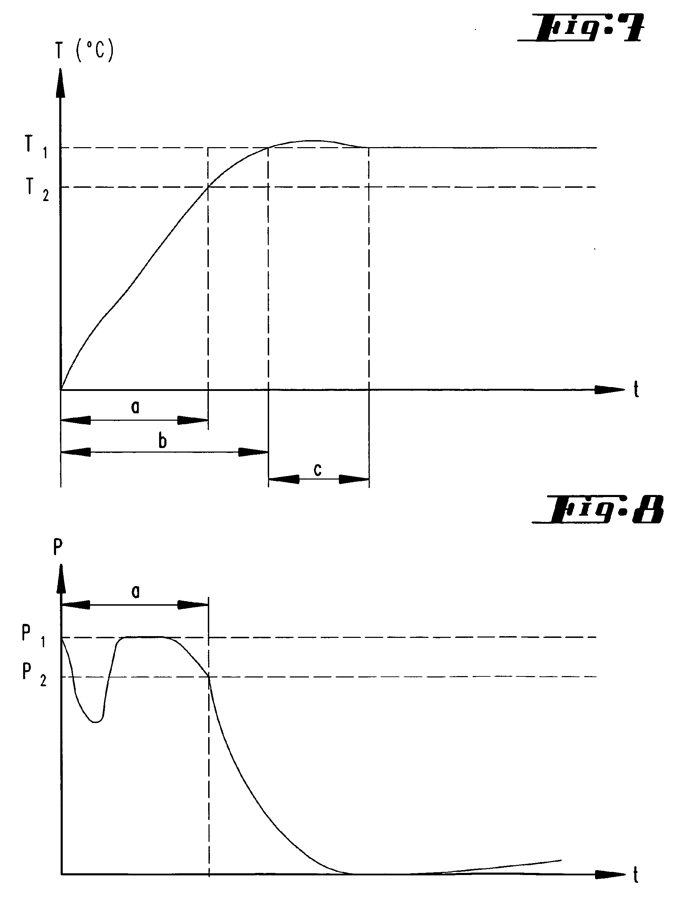

In Figur 6 ist ein Blockschaltbild der Steuerung der Widerstandsheizung 2 8 gezeigt. Die gewünschte Temperatur wird über den Drehschalter 16, welcher als lineares Potentiometer ausgebildet ist, eingestellt und als Spannungswert über einen Analog/Digital-Wandler dem Regelkreis 2 9 als Soll-Wert zugeführt. Der Temperatursensor 13 misst die aktuelle Temperatur am Topfboden 14 und meldet nach Durchlauf eines Linearisierungs-Moduls 30 den ermittelten Ist-Wert dem Regelkreis 29. Da die aktuelle Temperatur am Gefäßboden ermittelt wird, erfolgt hiernach eine Korrektur des ermittelten Wertes in einem Temperaturkompensations-Modul 31, in welchem ein Faktor, entsprechend den Wärmeübergangszahlen, aufgerechnet wird. Der so korrigierte Ist-Wert entspricht somit der eigentlich wesentlichen Rührguttemperatur. Dieser Ist-Wert wird dem Soll-Wert in einem Vergleicher 32, beispielsweise einem Differentialverstärker, gegenübergestellt. Die Heizung wird sollwertabhängig angesteuert, wobei bei Vorgaben von 40°C bis 60°C mit geringerer Energie als bei Vorgaben von mehr als 60°C angesteuert wird. So ist ein Proportionalitätsmodul 33 vorgesehen, in welchem je nach Vorgabe des Soll-Wertes Proportionalitätsfaktoren gewählt werden. Bevorzugt werden hierbei Faktoren, welche bei Vorgaben von 40°C bis 60°C einem Wert von 1,6 und bei Vorgaben von mehr als 60°C einem Wert von 2,8 entsprechen Diesem Proportionalitätsmodul 33 ist ein Sicherungs-Modul 34 nachgeschaltet, welches sicherstellt, dass eine Temperatur von 100°C nicht überschritten wird.

Von diesem Sicherungs-Modul 34 ausgehend werden die ermittelten Daten über ein weiteres Proportionalitätsmodul 35 und einen Filter 36 an ein Steuermodul 37 weitergeleitet. Auf dieses Steuermodul 37 wirkt ein Generator 38, bevorzugt ein Sägezahn-Generator, welcher in einem 15-Sekunden-Takt arbeitet Hierdurch wird in dem Steuermodul 37 ein entsprechend 15 Sekunden lang andauerndes Steuerungsfenster geöffnet, in welchem eine Steuerung der Leistungsaufnahme der Widerstandsheizung 28 erfolgt. Hierzu ist ein Taktgeber 39 vorgesehen, welcher die Daten zwischen dem zweiten Proportionalitätsmodul 35 und dem Filter 36 abgreift und in einem Sekundentakt in das Steuermodul 37 einfließen lässt.

Ist beispielsweise eine hohe Heizleistung bzw. eine große Energie erforderlich, so wird innerhalb des 15 Sekunden andauernden Fensters des Steuermoduls 37 beispielsweise ein 12 Sekunden andauerndes, hohes Signal geliefert. Über die restlichen drei Sekunden erfolgt entsprechend ein niedriges Signal. Diese Signale entsprechen beispielsweise der Höhe der an der Widerstandsheizung 28 anliegenden Spannung. Ist jedoch eine niedrigere Energie erforderlich, so wird z.B. innerhalb des 15-Sekunden-Fensters ein lediglich 5 Sekunden andauerndes hohes Signal geliefert, mit nachfolgendem 10 Sekunden andauerndem niedrigerem Signal. Es ist auch denkbar, innerhalb des gesetzten Fensters die Widerstandsheizung 28 gänzlich an- bzw. auszuschalten. Die Leistungsaufnahme der Widerstandsheizung 28 ist somit in einem Zeitintervall von 15 Sekunden geregelt, wobei innerhalb dieser 15 Sekunden Zeitspannen von hohen und niedrigen Signalen vorgesehen sind.

Die Regelung der Heizleistung wird weiterhin von der Temperaturanstiegsgeschwindigkeit beeinflusst. Hierzu werden die ermittelten Ist-Werte nach dem Temperaturkompensations-Modul 31 abgegriffen und, nach Durchlauf eines Filters 40, an ein Temperaturanstiegsgeschwindigkeits-Modul 41 weitergeleitet. Die hier ermittelten Werte werden über eine Koppelstelle 42 zu einem zwischen dem Sicherungs-Modul 34 und dem zweiten Proportionalität-Modul 35 angeordneten Vergleicher 43, beispielsweise in Form eines Differentialverstärkers, geführt. Letzterer ermittelt nunmehr den an das Steuermodul 37 zu leitenden Wert aus den Werten des ersten Proportionalitäts-Moduls 33 und der Koppelstelle 42.

Weiter beeinflusst auch eine Füllmengenermittlung die Steuerung der Heizleistung. Hierzu ist ein Zweig vorgesehen, welcher ebenfalls die Daten nach dem Temperaturkompensations-Modul 31 abgreift und, nach Ablauf einer vorgegebenen Zeit nach Einschalten des Rührwerkes 9, beispielsweise 2 Minuten, dieses Signal auf ein Füllmengenermittlungs-Modul 44 schaltet. Das Ergebnis der Füllmengenermittlung wird in einer Auswerteinheit 45 in Relation zu der voreingestellten Drehzahl des Rührwerkes 9, welches über den Drehschalter 17 einstellbar ist, gesetzt.

In dem Füllmengenermittlungs-Modul 44 wird das Verhältnis von zugeführter Heizenergie zur Temperatursteigerung ermittelt, was einen Rückschluss auf die Füllmenge zulässt. Da jedoch bei unterschiedlichen Drehzahlen des Rührwerkes 9 unterschiedliche Wärmeübergangswiderstände gegeben sind, ist eine korrigierte Füllmengenermittlung erforderlich. Diese erfolgt in der bereits erwähnten Auswerteinheit 45. Hier wird die ursprünglich ermittelte Füllmenge aus dem Füllmengenemüttlungs-Modul 44 in Relation zu der voreingestellten Drehzahl des Rührwerkes 9 gesetzt. Der somit ermittelte Wert wird mit dem Inhalt eines Kennlinienfeldes verglichen Der Inhalt des Kennlinienfeldes basiert auf empirisch ermittelten Messwerten, welche bei verschiedenen Füllungen mit unterschiedlichen Temperaturanstiegswerten und Drehzahlen ermittelt wurden. Die empirisch ermittelten Werte sind in einem nicht flüchtigen Speicher gesichert.

Die aus der Auswerteinheit 45 resultierende, korrigierte Füllmenge wird als Wert an die bereits erwähnte Koppelstelle 42 weitergeleitet, wo eine Verknüpfung dieser Werte mit den Temperaturanstiegsgeschwindigkeitswerten erfolgt.

Die Steuerung der Widerstandheizung 2 8 erfolgt somit neben dem üblichen Soll-/Ist-Wertevergleich durch die Ermittlung der Temperaturanstiegsgeschwindigkeit und der Füllmenge. Die Steuerung ist so ausgelegt, dass unabhängig von Wärmeleitwert und Menge des aufzuheizenden Rührgutes in dem Rührgefäß 6 eine vergleichmäßigte Aufheizung erfolgt

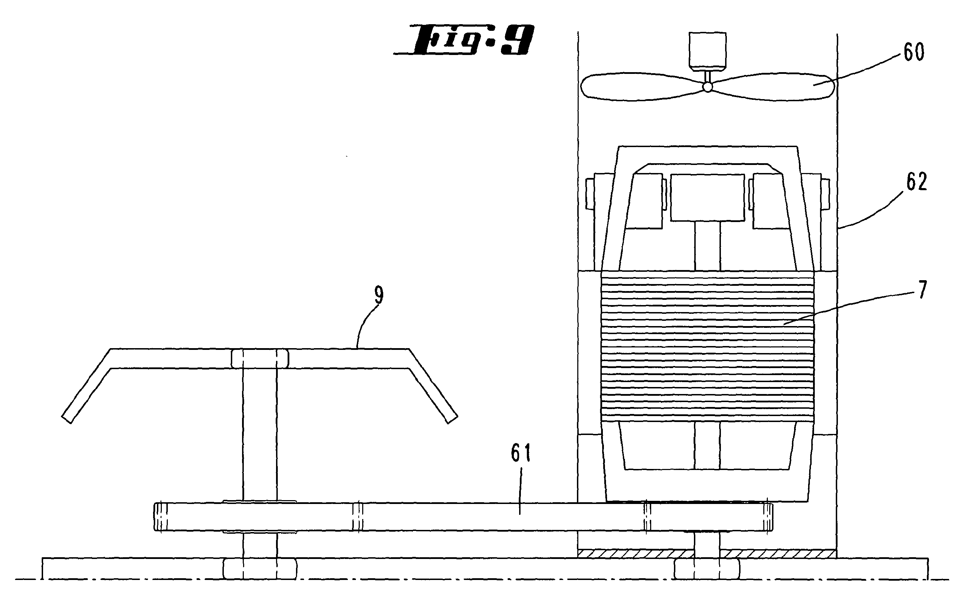

In Figur 7 ist an einem Beispiel eine Temperaturanstiegskurve gezeigt. Figur 8 hingegen zeigt die Linie der Leistungsaufnahme bei gleicher Zeiteinheit wie bei der Temperaturkennlinie auf. In Figur 7 ist mit T1 die voreingestellte MaximalTemperatur gekennzeichnet P1 bezeichnet in Figur 8 die maximale Leistungsaufnahme.

Wie in den beiden Figuren 7 und 8 zu erkennen, wird bei einem Einschalten der Widerstandsheizung 2 8 zunächst die Leistungsaufnahme auf ein Maximum geregelt Um einen stets gleichmäßigen Temperaturanstieg, wie in Figur 7 dargestellt, zu erzielen, wird kurzzeitig die Leistung heruntergeregelt, um hiernach wiederum bis zu einem Maximum P1 gesteuert zu werden. Erreicht die Temperatur eine etwas unterhalb der voreingestellten Temperatur liegende Schwelltemperatur T2, so erfolgt hiernach eine gleichmäßige Minderung der Leistungsaufnahme. Bevor jedoch die Temperatur nach einem Zeitabschnitt a diesen Schwellwert T2 erreicht, erfolgt bereits eine Verminderung der Leistung von der Maximalleistung P1 auf eine Schwellwertleistung P2

Nach Durchlauf dieses Zeitabschnittes a und dem danach erfolgenden gleichmäßigen Herabfahren der Leistung steigt die Temperatur weiterhin an, bis diese die maximal voreingestellte Temperatur erreicht, dies nach Ablauf eines Zeitabschnittes b, wobei sogar über einen nachfolgenden Zeitabschnitt c ein Überschwingen über die voreingestellte Temperatur erfolgen kann. Nach Ablauf dieses nachfolgenden Zeitabschnittes c bleibt die Temperatur konstant auf der voreingestellten Höhe.

Mittels des Drehschalters 17 für die Drehzahl des Rührwerkes 9 ist eine Rührwerk-Einstellung wählbar, welche eine Teigrührschaltung in Betrieb setzt. Zur Erlangung dieser Rührwerk Einstellung wird der Drehschalter 17 von einer Null-Stellung 46 entgegen dem Uhrzeigersinn in eine Teigrührstellung 47 verdreht. In dieser Teigrührstellung sind Rührphasen durch regelmäßige Stillstände unterbrochen. Letztere erstrecken sich im Vergleich zu den Rührphasen etwa über eine dreifache Zeitspanne, wobei bevorzugt eine Ruhephase von 4,5 Sekunden im Vergleich zu einer Rührphase von 1,5 Sekunden voreingestellt ist. Vorteilhaft an dieser Teigrührschaltung ist, dass sich in den Rührphasen der zu rührende Teig wieder setzen kann. Die Schaltung ist auch dahingehend vorteilhaft, dass sie zur Motorkühlung genutzt werden kann. In der Rührphase lassen sich daher kurzfristig sehr hohe Umdrehungszahlen realisieren.

In der Teigrührschaltung wird die an sich aus der Leistungsaufnahme ergebende maximale Drehzahl von ca.11.500 U/min bedingt durch den Rührgutwiderstand auf ein Drittel oder weniger reduziert. Hierbei stellen sich Drehzahlen zwischen 100 bis 3.000, im Mittel 500 U/min ein. Die Ruhephasen werden genutzt zur aktiven Kühlung des Antriebsmotors 7 mittels eines in einer Luftführung 62 angeordneten, separaten Kühllüfters 60 (vgl. Fig. 9). Der Antriebsmotor 7 ist als stehender Universalmotor (Reihenschlussmotor) ausgebildet und ebenfalls im Bereich der Luftführung 62 positioniert. Dieser treibt über einen Riemen 61 das Rührwerk 9 an. Der Motor wird mit Netzspannung versorgt und über einen Triac angesteuert. Bedingt durch die hohen Belastungen in der Teigrührstellung, bspw. bei einer Hefeteigzubereitung, steigt die Motortemperatur aufgrund der erhöhten Verluste in den Kupferwicklungen über den vorgeschriebenen Grenzwert hinaus an. Der Motor ist hierbei so ausgelegt, dass bei der für den Einsatz des Gerätes maximal vorgesehenen Belastung eine ausreichende Drehbewegung (Umwälzung bei Herstellung von Teig) gewährleistet ist. Der externe Kühllüfter 60 erzeugt während dieser Betriebsart die maximale Luftleistung, die jedoch allein nicht ausreicht um den Antriebsmotor 7 unter den für den Einsatz vorgeschriebenen Grenzwert der Temperatur herabzukühlen. Hierzu wird der Antriebsmotor 7, wie bereits erwähnt, nur mit Impulsen angesteuert, wobei die volle Netzspannung geschaltet wird und sich eine der Belastung entsprechende Drehzahl einstellt Die Dauer (Pulsbreite) des Ansteuerimpulses ist dabei derart ausreichend ausgelegt, dass bei der für den Einsatz des Gerätes maximal vorgesehenen Belastung die notwendige Arbeit verrichtet wird. Das Verhältnis der Pulsbreite des Ansteuerimpulses für den Motor zur jeweils nachfolgenden Aus-Zeit ist so festgelegt, dass bei maximaler Luftleistung des externen Kühllüfters 60 und bei der maximal vorgesehenen Belastung für eine bestimmte Dauer die für den Einsatz des Gerätes vorgeschriebene Grenztemperatur der Motorwicklungen nicht überschritten wird.

Aufgrund der Charakteristik des als Universalmotor ausgebildeten Antriebsmotors 7, läuft letzterer bei einem Impulsbetrieb mit jedem Einschaltvorgang mit dem maximal zur Verfügung stehenden Drehmoment aus dem Stillstand an und verursacht so einen für bestimmte Anwendungen nützlichen Losreißeffekt. Dies bspw. bei der Herstellung von Hefeteig, wobei bei jedem Einschaltvorgang ein Losrütteln von Teigbestandteilen zu einer Verbesserung der Rückführung des Teiggemisches in den Arbeitsbereich des Knetwerkzeuges im Rührgefäß 6 erreicht wird.

Der in der Figur 9 schematisch dargestellte Kühllüfter 60 wird über einen eigenen, nicht dargestellten Elektromotor angetrieben. Um von der Teigrührschaltung in die normale Rührschaltung, bzw. umgekehrt, zu gelangen, ist stets ein Überlaufen der Null-Stellung 46 erforderlich.

Mittels der Taste 20 im Bedienerdisplay 15 ist eine Turbofunktion schaltbar, bei welcher kurzfristig sehr hohe Drehzahlen des Rührwerkes 9 erzielt werden können.

Bei einer Grund- bzw. Normallast, wie sie bei den überwiegenden Geräteanwendungen zum Einsatz kommt, wird der Antriebsmotor 7 innerhalb seiner Kennlinie durch Phasenanschnitt auf die geforderten Drehzahlen geregelt. Für die notwendige Kühlung sorgt der externe Kühllüfter 60, wobei die Luftleistung der Wärmeentwicklung im Antriebsmotor 7, gemessen von einem nicht dargestellten Temperaturfühler im Antriebsmotor 7, durch elektronische Regelung angepasst wird.

Sowohl die Teigrührschaltung als auch die Turboschaltung sind nur aktivierbar, wenn die Aufheiztemperatur unterhalb einer bestimmten Grenztemperatur voreingestellt ist. Bevorzugt wird hierbei eine Grenztemperatur von 70°C. Dies hat insbesondere den Hintergrund, dass bei Temperaturen von mehr als 70°C bereits örtlich Siedeerscheinungen auftreten können, die durch die Rührfunktion verstärkt werden. Dies kann bei sehr hohen Drehzahlen, welche sowohl bei der Teigrührschaltung als auch bei der Turboschaltung auftreten können, dazu führen, dass sich ein sehr starker Druck aufbaut und der Deckel des Rührgefäßes abgehoben wird.

Weiterhin bewirkt eine Elektronik, dass abhängig von einer voreingestellten Drehzahl des Rührwerkes 9 ein Hochfahren des Rührwerkes 9 auf diese Drehzahl zunächst langsam und dann schneller erfolgt. Hierzu ist vorgesehen, dass bei einer voreingestellten Drehzahl von bis zu etwa 1000 Umdrehungen pro Minute immer ein langsames Anfahren erfolgt. Bei größeren eingestellten Drehzahlen, oberhalb etwa 1000 Umdrehungen pro Minute erfolgt ein ruckartiges Anfahren Ist jedoch die Heiztemperatur auf größer als 70°C eingestellt, so erfolgt auch bei einer Einstellung einer Umdrehungszahl von mehr als 1.000 U/min ein langsames Anfahren und die Drehzahl überschreitet gleichwohl nicht die 1.000 U/min. Die Drehzahlveränderung bei normalem Betrieb, d.h bei konstanter Drehzahl des Rührwerkes, erfolgt ohne Getriebe. Die Veränderung der Drehzahl wird mittels einer Steuerung über den Phasenanschnittswinkel vorgenommen

Hohe Drehzahlen von mehr als 1.000 U/min werden bei den meisten Anwendungen zum Zerkleinern des Topfinhaltes eingestellt. Man benötigt hierbei das maximale Drehmoment des Antriebsmotors 7, um beim Anlaufen ein Verkeilen des Mixwerkzeuges in dem Medium zu vermeiden. Der zur Verfügung stehende Antriebsmotor 7 kann das maximale Moment nur bei maximaler Versorgungsspannung aufbringen, d. h. ohne Phasenanschnitt starten und dann auf die Soll-Drehzahl regeln. Niedrige Drehzahlen von weniger als 1.000 U/min werden überwiegend im Kochbetrieb zum Rühren verwendet. Hier muss ein Zerkleinern des Topfinhaltes vermieden werden, in dem der Antriebsmotor 7 mit geringer Versorgungsspannung (maximaler Phasenanschnitt) gestartet und dann auf die Soll-Drehzahl geregelt wird.

Die Drehzahlregelung wird über einen Mikroprozessor programmtechnisch realisiert. Die Sollwertvorgabe erfolgt stufenlos über den bereits erwähnten Drehschalter 17, welcher als Potentiometer ausgebildet ist. Die Rückmeldung über den jeweiligen Ist-Wert erfolgt durch einen Sensor, der die Drehbewegungen des Antriebsmotors 7 an der Motorwelle abgreift. Die Auslegung der den Regelkreis bestimmenden Komponenten ist dabei so geartet, dass ein Regelbereich, von mindestens 1:100 erreicht ist, d. h. Drehzahlen von z. B. 100 bis ca. 10.000 U/min am Mixwerkzeug.

Die erwähnten Schalter 16 und 17 zur Voreinstellung von Temperatur und Drehzahl sind, wie bereits erwähnt, mittels LED-Anzeigen 23, 24 beleuchtet. Diese Beleuchtungen haben für den Benutzer Signalwirkung, da bei höheren Einstellwerten eine Beleuchtung anderer Farbe und/ oder Intensität zugeordnet ist als bei niedrigeren Einstellwerten. Hier ist insbesondere vorgesehen, dass die LED-Anzeigen 23, 24 zweifarbig ausgebildet sind, wobei ein gelber Bereich den niedrigeren Einstellwerten und ein roter den höheren Einstellwerten zugeordnet ist. Während bei den niedrigeren Einstellbereichen die gelben LED's stark aktiviert sind, die roten dagegen nur schwach, erfolgt mit zunehmend höheren Einstellungen eine Abschwächung der Aktivierung der gelben und eine Verstärkung der Aktivierung der roten LED's.

Licht emittierende Komponenten wie z. B. LED's speisen Licht von entgegengesetzten Richtungen in einen Lichtleiter ein. Der Lichtleiter ist dabei so ausgelegt, dass Licht senkrecht zur Richtung der Einspeisung abgestrahlt wird und so der Effekt eines Lichtbalkens entsteht. Je nach Ansteuerung der Einspeisekomponenten (LED's) kann so entweder die Intensität von einer Seite des Lichtbalkens zur anderen verlagert werden und erhöht werden (bei gleichfarbigen Einspeisekomponenten) oder bei farbig unterschiedlichen Einspeisekomponenten ein Effekt fließender Veränderung von der Farbe der einen Einspeisekomponente über Mischlicht bis hin zur Farbe der anderen Einspeisekomponente erzielt werden.

Für die Drehzahl kann bei zweifach einfarbiger Einspeisung einer niedrigeren Drehzahl eine entsprechende Intensität zugeordnet und angezeigt und bei Erhöhung der Drehzahleinstellung die Intensität zum anderen Ende des Lichtbalkens hin verlagert oder erhöht werden.

Die in dem Bedienerdisplay 15 angeordnete elektrische Uhr 18 weist einen Drehschalter 19 auf, zur Vorwahl einer Heizzeit und/ oder einer Rührzeit. Die Einstellung der Uhr 18 erfolgt hierbei in einfachster Weise, indem durch eine hohe Drehgeschwindigkeit des Drehschalters 19 über einen bestimmten Drehwinkel eine große Zeiteinheit, beispielsweise eine Minute, und durch eine niedrigere Drehgeschwindigkeit des Drehschalters 19 über denselben Drehwinkel eine niedrige Zeiteinheit, beispielweise eine Sekunde, zuordbar ist. Dies bedeutet, dass über den Drehschalter 19 sowohl eine Verstellung in kleinen wie auch in großen Schritten möglich ist, ohne jeweils den gesamten Einstellbereich durchfahren zu müssen.

Der am rückwärtigen Bereich des Gehäuses 2 angeordnete Sammelstecker 26 ist als Schnittstelle ausgebildet. In diesem können bezüglich der elektrischen/elektronischen und/oder mechanischen Komponenten Abfrageschleifen zusammengerührt sein Beispielsweise können über diesen Sammelstecker 26 Funktionsausfälle in den Hauptkomponenten, wie Motor 7 und Heizung 28, oder in anderen elektrischen Elementen erfasst werden. Weiterhin auch eventuelle Fehlermeldungen. So z.B. auch Spannungsabfälle in den Motorwicklungen oder in den elektronischen Elementen, womit eine gezielte Fehlersuche realisiert ist. Ebenfalls ist es möglich, über diese Schnittstelle nach der Gerätefertigung gerätespezifische Werte einzustellen bzw. zu kalibrieren Auf diese Weise kann auf aufwendige elektrische/mechanische Justiervorgänge und entsprechende elektrische/mechanische Bauelemente verzichtet werden Die jeweiligen, gerätespezifischen Werte werden dabei in einem nicht flüchtigen Speicher (EEPROM) in der Elektronik der Küchenmaschine 1 gespeichert und können im Servicefall geändert werden.

Hierzu kann ein Teil der Kalibrierschaltung bzgl. jeder Abfrageschleife einer elektrischen/elektronischen Komponente der Küchenmaschine 1 in einem herausnehmbaren und steckbaren Gehäuseteil ausgebildet sein. Vorteilhafterweise ist ein derartiges Gehäuseteil hinsichtlich der Kalibrierungswerte programmierbar und als Dongle ausgebildet

Mit Hilfe dieses werkseitig programmierbaren Dongles können die Hauptkomponenten der Küchenmaschine 1 kalibriert werden, wobei die Werte in einem nicht flüchtigen Speicher (EEPROM) abgelegt werden Bspw. können hier nach neuesten Erkenntnissen ermittelte empirische Messwerte für das Kennlinienfeld der Rührwerkdrehzahlen eingespeist werden.

Eine Kalibrierung kann derart erfolgen, dass der Dongle auf den Sammelstecker 26 bzw. der Schnittstelle gesetzt wird und hiernach die Küchenmaschine 1 eingeschaltet wird. Das Zeit-Display 18 zeigt den jeweiligen Kalibrierungsschritt an, wobei bevorzugt zehn Schritte durchgeführt werden. Das Waagen-Display 21 zeigt in den verschiedenen Kalibrierungsschritten die einzustellenden Kenndaten an, wie bspw. bei der Tarierung der Waage einen Punkt. Nach Einschalten der Küchenmaschine 1 zur Kalibrierung zeigt das Waagen-Display 21 zunächst die Versionsnummer des Dongles an. Ist die Küchenmaschine 1 bereits zu einem früheren Zeitpunkt mit einer älteren Dongle-Version kalibriert worden, so blinkt die Versionsnummer in dem Waagen-Display 21. Nach Abschluss eines jeden Kalibrierungs-Schrittes wird die Reset-Taste 22 gedrückt, um in den nächsten Kalibrierungs-Schritt zu gelangen

Der Sammelstecker 26 kann auch als Schnittstelle für einen Computer ausgebildet sein. Die über die Abfrageschleifen ermittelten Werte können somit von einem Computer erfasst und ausgewertet werden Hier sind beispielsweise die Ist- und Soll-Temperaturen, sowie die Ist- und Soll-Drehzahlen, das Resultat der Füllmengenermittlung und eventuelle Resultate einer Waageneinrichtung zu nennen. Aufgrund dieser ermittelten und per Computer erfassten Daten können auch mit im Computer abgespeicherten Soll-Daten Vergleiche gezogen werden, wonach dem Benutzer durch den Computer eventuelle Fehlbedienungen, wie beispielsweise zu hoch eingestellte Temperatur oder Drehzahl, mitgeteilt werden können.

Es ist auch denkbar, die Schnittstelle, bzw. den Sammelstecker 26, zu einem computerunterstützten Betrieb der Küchenmaschine 1 zu nutzen. Hier kann beispielsweise nach Einfüllen von vorbestimmten Zutaten in das Rührgefäß 6 der Computer die Drehzahl des Rührwerkes 9, die Temperatur der Widerstandsheizung 28 und die Dauer des Rührens bzw. des Aufheizens bestimmen, regeln und kontrollieren.

## Patentansprüche

1. Küchenmaschine mit einem Rührgefäß (8) und einem Antrieb (7) für ein Rührwerk (9) in dem Rührgefäß (6), wobei das Rührgefäß (6) in seinem unteren Bereich aufheizbar ist, wobei die Drehzahl und/oder die Temperatur über beleuchtete Schalter (16, 17), beispielsweise Dreh- oder Schiebeschalter erfolgt, wobei höheren Einstellwerten eine Beleuchtung anderer Farbe zugeordnet ist als niedrigeren Einstellwerten, **dadurch gekennzeichnet, dass** die Beleuchtung durch LED-Anzeigen realisiert ist und dass die LED-Anzeigen zweifarbig ausgebildet sind.

2. Küchemaschine nach Anspruch 1, **dadurch gekennzeichnet, dass** ein gelber Bereich den niedrigeren Einstellwerten und ein roter Bereich den höheren Einstellwerten zugeordnet ist.

3. Küchenmaschine nach einem der Ansprüche 1 oder 2, **dadurch gekennzeichnet, dass** die Farbänderungen durch eine starke oder schwache Aktivierung der LED's der jeweiligen Farbe realisiert ist.

## Claims

1. A food processor having a mixing vessel (8) and a drive mechanism (7) for an agitator (9) located in the mixing vessel (6), the mixing vessel (6) being capable of being heated in its lower region, the speed of rotation and/or the temperature being established by way of illuminated switches (16, 17), for example rotary or push switches, the illumination associated with higher setting values being of a different colour than that associated with lower setting values, **characterised in that** the illumination is realised by LED-displays and that the LED displays are of two colours.

2. A food processor according to Claim 1, **characterised in that** a yellow array is associated with the lower setting values and a red array is associated with the higher setting values.

3. A food processor according to one of Claims 1 or 2, **characterised in that** the changes of colour are realised by a stronger or weaker activation of the LEDs of the respective colour.

## Revendications

1. Robot ménager avec un récipient d'agitation (6) et un entraînement (7) pour un agitateur (9) monté dans le récipient d'agitation (6), le récipient d'agitation (6) pouvant être chauffé dans sa zone inférieure, dans lequel la vitesse de rotation et/ou la température est déterminée moyennant des interrupteurs illuminés (16,17), par exemple des interrupteurs rotatifs ou à glissement, des valeurs de réglage plus élevées étant associées à une illumination d'une autre couleur que les valeurs de réglage plus faibles, **caractérisé en ce que** l'illumination est réalisée au moyen d'afficheurs électroluminescents (LED) et **en ce que** les afficheurs à LED sont réalisés en deux couleurs.

2. Robot ménager selon la revendication 1, **caractérisé en ce que** une plage jaune est associée à des valeurs de réglage plus faibles et une plage rouge est associée aux valeurs plus élevées.

3. Robot ménager selon l'une des revendications 1 ou 2, **caractérisé en ce que** le changement de couleur est obtenu grâce à une activation forte ou faible des LEDs de la couleur concernée.
